# EUROPEAN PATENT SPECIFICATION

(11) **EP 1 263 191 B1**
(45) Date of publication and mention of the grant of the patent: **26.10.2005**
(21) Application number: 02252695.8
(22) Date of filing: 16.04.2002
(51) Int. Cl.: H04M 1/02

(54) **Portable electronic device**
Tragbares elektronisches Gerät
Appareil électronique portable

(30) Priority: 30.05.2001 US 867837
(43) Date of publication of application: 04.12.2002
(73) Proprietor: Hewlett-Packard Company, Palo Alto, CA 94304 (US)
(72) Inventor: Lee, Man Wei, Singapore 169016 (SG)
(74) Representative: Jehan, Robert

(56) References cited:
- EP-A- 0 776 140
- EP-A- 0 886 204
- EP-A- 0 898 405
- GB-A- 2 343 324
- US-A- 6 014 141
- US-A- 6 125 286

## Description

The present invention pertains to a portable device, for example a hybrid portable device utilizing separate display panels pre-assigned to respective operation modes for displaying associated information and selected cross-operation information. The device provides mobile communication and PDA features.

EP-A-0,886,204 discloses a portable computer system incorporating a multi-purpose status display module that is visible when the main video display is in either an open or locked condition. The status display module is used as an autonomous, real-time battery gauge. The battery gauge display allows a user to monitor the charge status of a battery pack when the system is powered up, when the battery is being recharged by an AC adapter, or when the portable computer is placed into a secondary operating mode. Control signals for the status display are generated by a multi-purpose microcontroller.

US-A-6,125,286 discloses a portable communication device which includes a housing, a first display area, and a second display area. The first display area is outwardly directed from a side of the housing, and the second display area is outwardly directed from a front of the housing. The housing may include a housing portion moveable to an open position and a closed position, where the second display area is covered by the housing portion when positioned in one of the first and the second positions.

Until recently, mobile phones and Personal Digital Assistants (PDAs) have been embodied separately to perform their dedicated functions, namely mobile communication and personal information management. With these devices becoming a lifestyle necessity, users have found themselves juggling between two separate devices. To reduce the hassle of carrying several devices and to provide a seamless user experience, manufacturers have come up with a hybrid device. Thus, users enjoy the convenience as well as the elegance of having a hybrid device.

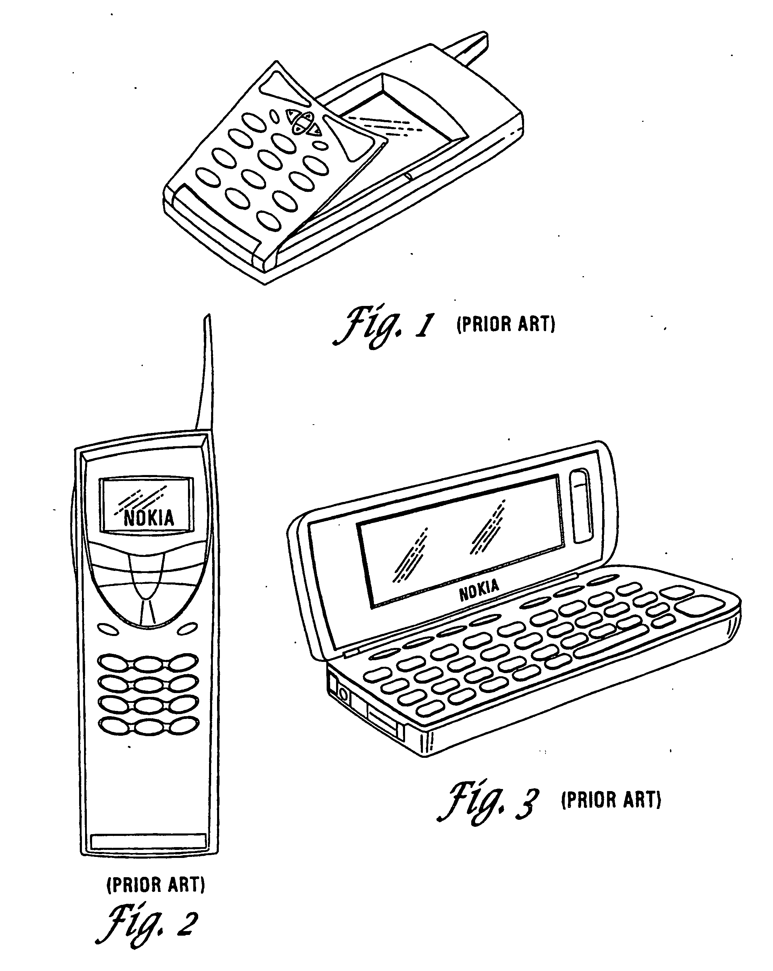

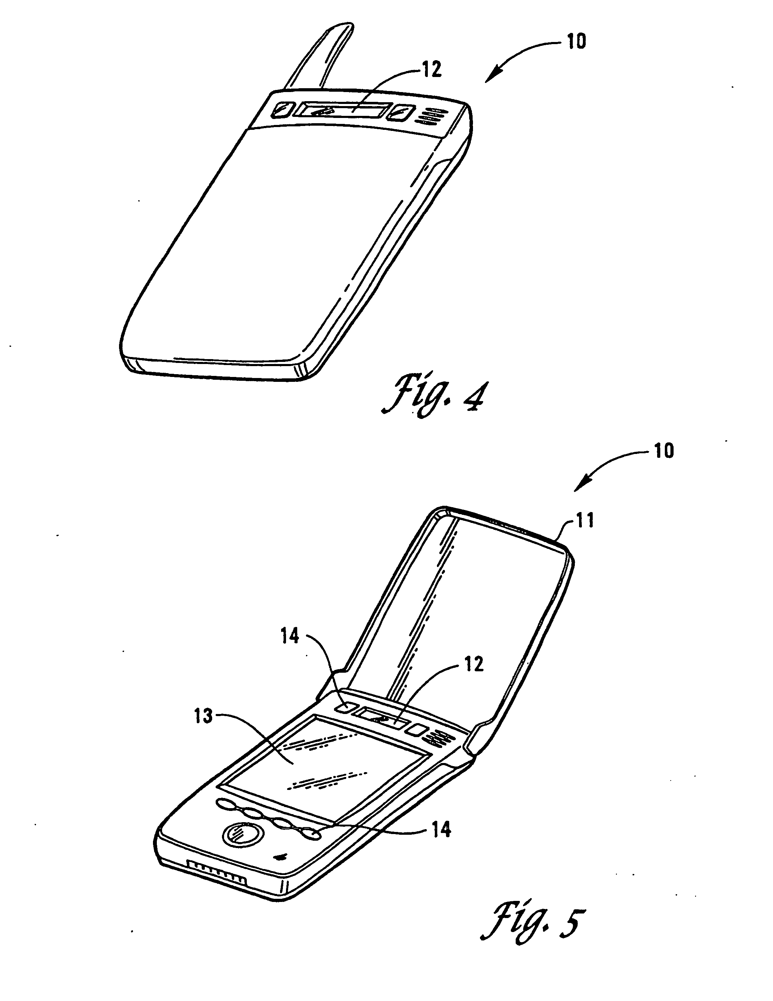

Many users have long been accustomed to the conventional user presentation of mobile phones and PDAs to an extent that users of such hybrid devices have to readapt to a new user presentation. Manufacturers are therefore striving to design user presentations that emulate both a mobile phone and a PDA with which users are accustomed. Two current embodiments adopted by manufacturers are shown in FIG. 1, FIG, 2 and FIG. 3.

FIG. 1 illustrates a portable device, which includes a single display panel and a moveable cover. The cover is designed to move between a closed position and an open position. In the closed position, the cover overlays a large proportion of the display panel, exposing only a small portion of the display panel for viewing by a user. The small visible portion typically displays information pertaining to mobile communication, such as signal strength, battery level and incoming call alert. In an open position, the cover is flipped to reveal the entire display panel for viewing lengthy information such as electronic mail messages, calendar entries and task lists.

This user presentation has a few drawbacks. While the cover is in an open position, the entire LCD (Liquid Crystal Display) is necessarily powered up for viewing. In the closed position, even though concealed portion of the LCD is not visible and not viewed by a user, it is also powered up. As the concealed portion of the LCD is substantially larger than the visible portion, a large proportion of the battery power used is in effect wasted. Battery power is unnecessarily depleted and thereby greatly reducing the mobility of the device. Furthermore, when the cover is in a closed position, the user views the display in a portrait orientation. When the user opens the cover to use the PDA features, he needs to view the display in a landscape orientation. Information pertaining to mobile communication that was previously displayed in a portrait orientation is reoriented and rearranged on the display for viewing in a landscape orientation. The user has to instantly familiarize himself with the different content locations. Thus he is likely to be confused by the abrupt change in orientation and frustrated by the inconvenience of relocating information and reorienting his visual perspective.

Even if the orientation does not change and the location of mobile communication information remains unchanged, the user has to make a mental effort to locate (or search for) the mobile communication information by consciously identifying the corresponding status (or menu) bar embedded within the display area.

FIG. 2 and FIG.3 illustrate a second portable device, which includes two display panels on different faces of a cover-like plane. Both display panels are separately powered. The smaller display panel in FIG. 2 is powered up when the mobile phone mode is active. The larger display panel in FIG. 3 is powered up when the PDA mode is active. In this way, usage of battery power is conserved as compared to the first portable device.

While the second device has a lower power-consumption advantage over the first device, the second device has other drawbacks. When the user uses the PDA mode, the cover-like plane is opened so that the user can view the larger display panel arranged on an inner side of the cover. As the user is unable to view both display panels at the same time, the information pertaining to mobile communication previously displayed on the smaller screen is now displayed on a left vertical sidebar on the larger display panel. In so doing, the effective display area is reduced, which translates into inefficient use of precious display area. Similar to the first device, the user has to make a mental effort to locate such information by consciously identifying the associated status (or menu) bar embedded within the display area. Furthermore, whenever an incoming call arrives, the user has to close the cover to answer the call in a conventional manner and thereafter open the cover again to continue with using PDA functions. Also, the user has to reorient his visual perspective when switching between the two display panels.

In both devices, a user has to contend with a similar problem, i.e., to adapt to changes in user presentation when switching between the display panels or operation modes. Whether the change is reorientation in the display of information, or searching for an associates status bar, or closing a cover and reorienting the device for accessing a display panel, the user is unduly inconvenienced. This is more so for a new user.

The present invention seeks to overcome the various drawbacks of user presentations in existing devices for improving users' experience and to provide a new user presentation for use in portable information devices.

According to an aspect of the present invention there is provided a display assembly as specified in claim 1.

According to another aspect of the present invention there is provided a portable device as specified in claim 7.

According to another aspect of the present invention there is provided a method of implementing a user or presentation as specified in claim 9.

The preferred embodiment provides a hybrid or multifunction portable device utilizing separate display panels pre-assigned to different operation modes, such as, mobile communication and PDA functions, for displaying associated information and selected cross-operation information.

To this end, the device includes at least two display panels, a movable cover pivoting about one end of the device for moving between a closed and an open position. In the closed position, only a first display panel is visible to a user. In the open position, both the first display panel and a second display panel are visible to the user. The movable cover may also be readily detached from the hybrid device when necessary without interrupting the operation of the device. Alternatively, the device may work without the cover.

The preferred user presentation has the following advantages. By having each display panel powering up only when its designated mode of operation is active, power usage is made more efficient. Furthermore, having separate display panels for pre-assigned operation modes emulates familiar presentation of conventional single-use device, i.e., a mobile phone and a PDA, and allows location of information to be generally fixed. A user, especially a new user, no longer has to make a mental effort to consciously locate such information. The display panels, by displaying information associated to its operation mode, allow a user to immediately access (or view) the respective display panel without added mental effort. The display panels are arranged to allow a user to view both display panels simultaneously, or to view only one display panel in collaboration with the cover, when desired by the user. An example of this arrangement is to place both display panels on a same surface of the device.

Generally, the preferred embodiment is particularly advantageous for conveying both a distinct phone personality (when the cover is in a closed position), and a phone-and-PDA personality (when the cover is in an open position or when without the cover). In so doing, a new user is quickly eased into using the device with minimal readapting. More importantly, it can eliminate the need for a user to readapt to abrupt changes in user presentation when switching between display panels or operation modes.

Embodiments of the present invention are described below, by way of example only, with reference to the accompanying drawings in which:
FIG. 1 is a perspective view of a first prior art device;
FIG. 2 is a front view of a second prior art device;
FIG. 3 is a perspective view of the second prior art device of FIG.2;
FIG. 4 is a perspective view of one embodiment of the device in a closed position;
FIG. 5 is a perspective view of the embodiment of FIG.4 in an open position;
FIG. 6 is a perspective view of the hinge of the cover and the detent mechanism of the device of FIG.4;
FIG. 7 is a perspective view of the second embodiment of device with a sliding cover.

A portable device 10 which can incorporate the described embodimentstypically provides mobile communication functions and PDA functions.

The portable device 10 includes a first display panel and a larger second display panel 13 arranged on a same face of the device 10. The first display panel is typically a LCD (Liquid Crystal Display); the second display panel 13 is a LCD screen with an overlaying transparent touch-sensitive panel. The device 10 also includes a protective movable cover 11 for overlaying upon the second display panel 13. The protective cover 11 is attached to a longitudinal end of the device 10 for allowing the protective cover 11 to pivotally move between a closed position (illustrated by FIG.4) and an open position (illustrated by FIG.5). When the cover 11 is not required, it can be readily removed by detaching the cover 11 from the device 10. The device 10 may also include at least one input area. Illustrated in FIG.5 as an example, a first input area includes two input buttons 14 arranged on a top face of the device 10 proximate to the first display panel 12; a second input area includes four input buttons 14 arranged on the top face and proximate to the second display panel 13. Each input area is typically assigned to an operation mode for activating functions associated with the mode, or displaying information on a display panel corresponding to its operation mode, or both.

The device 10 may also include a serial port, a USB or a connection port arranged on a bottom panel of the device 10 for information transfer and synchronization. Other typical elements in the device 10 are an antenna (hidden or visible to a user), a printed circuit board containing electronic circuits for operating the device 10, speakers, microphone, battery and other elements typical of such devices.

Both the first 12 and the second 13 display panels are, for example, arranged on a same surface of the device 10 such that a user is able to simultaneously view information from both the display panels in a same orientation. The first display panel 12 is dedicated to display information content arising from using a first operational mode, e.g., mobile communication. It may display information such as signal strength, battery level, current network operator and personalized greetings as appropriate or preset by a user. The second display panel 13, which is substantially larger, is dedicated to display information content from using a second operational mode, e.g., PDA. Examples of such information include calendar application information, electronic mail messages, word processing documents and web pages. Well-appreciated by a person skilled in the art, both panels are driven by separate power regulators and LCD controllers. The power regulator and LCD controller of each display panel may be driven by a single power source, e.g., a rechargeable battery, or by a separate corresponding power source.

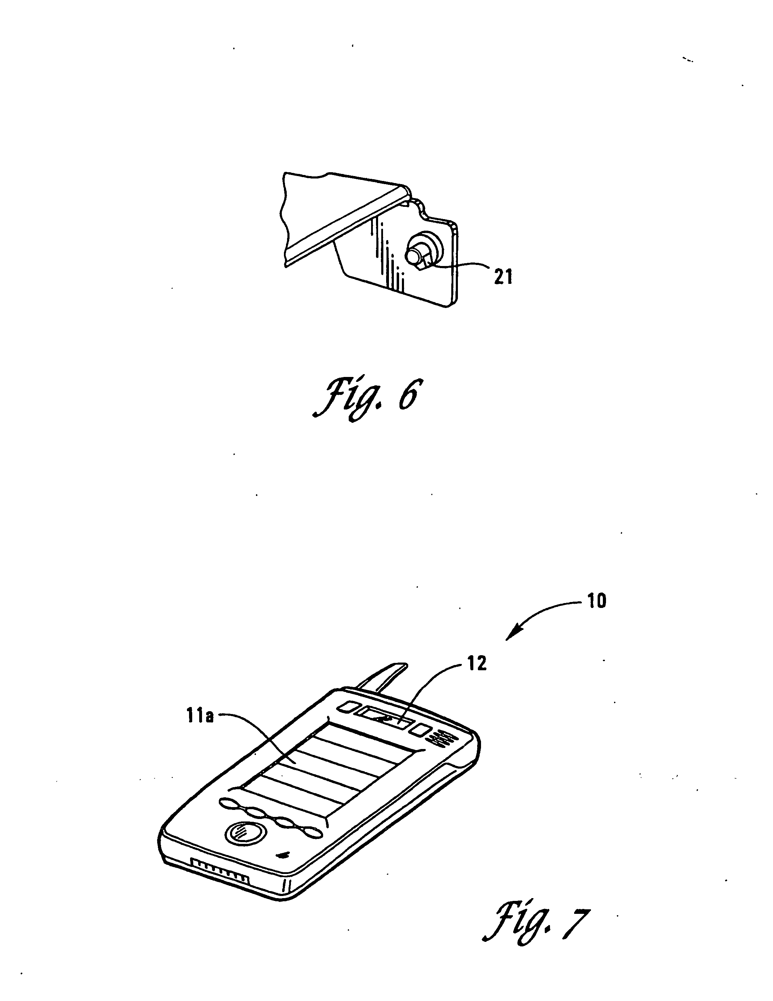

A cover 11 for this device 10 is movable at least between an open position and a closed position for selectively exposing or overlaying the second display panel 13 from a user. The cover 11 is typically opaque so that when it moves at least between an open position and a closed position, it selectively conceals (or overlays), or reveals (or exposes) the second display panel 13 to a user. As an example, the cover 11 is substantially of the same size as the device 10. Hence in the closed position, the cover 11 effectively conceals the second display panel 13, and forms an enclosed volume between the viewing surface of the second display panel 13 and the inner side of the cover 11 for protecting the surface of the second display panel 13 from dust and abrasive particles. The cover 11 may include a locking mechanism for firmly securing the cover 11 to the device 10 during a closed position so that the cover 11 does not inadvertently flip open. The locking mechanism may take any form, such as, having locking studs along a side of the cover 11 to engage with receiving hollows on the device 10, or the like. The cover 11 also includes an attachment means, which removably attaches the cover 11 to the device 10 and allows the cover 11 to move at least between two positions. An example of such removable attachment means is a hinge system as illustrated in FIG.6. The hinge system also includes a detent mechanism 21 which locks the cover 11 in a certain position to prevent the cover 11 from inadvertently closing or opening. The cover 11 also includes a cut-away portion (or opening) on one side, suitably dimensioned to reveal at least the first display panel 12 when the cover 11 is in a closed position. The cut-away portion may alternatively be suitably dimensioned to also reveal input buttons 14 for operating a first operation mode. In another example, the cut-away portion may be replaced by other viewing means such as a transparent surface. The transparent surface may also take the form of a magnifying material.

Although FIG.4 and FIG.5 illustrate the cover 11 to be substantially of the same size as the device 10, it is not to be so limited. The cover 11 should preferably be sized to overlay at least the second display panel 13 during a closed position.

FIG. 4 illustrates the portable device 10 with the cover 11 in a closed position, where the arrangement of the cover 11 and the first display panel 12 conveys a distinct phone personality. The closed position is typically used when the device 10 is not in use or when a mobile communication mode is enabled.

When the mobile communication mode is enabled, the device 10 is ready to receive and transmit calls of any form, including voice, data, or the like. Accordingly, the first display panel 12 is powered up and information content associated with mobile communication features is displayed on the first display panel 12 for viewing by a user. In this closed position, the protective cover 11 sufficiently conceals at least the second display panel 13 such that it is not visible to a user. The protective cover 11 may alternatively conceal the second display panel 13 and its corresponding input area such that both are not visible to the user (see FIG. 4). The protective cover 11, however, reveals the entire first display panel 12 to a user through a viewing means, such as, a cut-away portion along one end of the cover 11.

When using the mobile communication operation mode, a user may recall phone numbers from the device's 10 memory. However, if the number is not available, the user may input the phone number by accessing an on-screen keypad in the second display panel 13. In so doing, the second display panel 13 is powered. The number inputted is shown in the second display panel 13 and also displayed in the first display panel 12. In this respect, the second display panel 13 is able to display cross-operation information in a manner defined by a manufacturer, while not compromising the phone personality. Alternatively, the user may access a keypad of keyboard that may be connected to the device.

FIG.5 illustrates the device 10 with the cover 11 in an open position, where the arrangement of the display panels conveys a distinct phone-and-PDA personality. The open position is typically used when a user activates at least the PDA operation mode. When the user activates the PDA mode, the second display panel 13 is powered up and information content associated with PDA mode is displayed on the second display panel 13. In this open position, the protective cover 11 is sufficiently lifted to fully reveal both the first and the second display panels to the user. A detent mechanism 21 is implemented at the hinge to prevent the cover 11 from inadvertently closing while the user is accessing the second display panel 13.

As the cover 11 is removably attached to the device 10, the cover 11 may be removed without affecting the normal operation of the device 10.

The cover 11 may be made of a transparent material such that even as the cover 11 overlays the second display panel 13, the display panel 13 is visible, though not accessible, to a user. Hence, a cover like such selectively overlays or exposes the second display panel 13. Regardless of the degree of transparency of the cover 11, the cover is generally movable to selectively overlay or expose at least a second display panel. The first display panel 12 is consistently visible to a user and both display panels are simultaneously visible to a user when the second display panel 13 is exposed.

A second embodiment of the present invention is shown in FIG.7, which works in a similar manner. A protective cover 11a for this embodiment is a sliding cover 11a that extends from one side of the second display panel 13 to another either in a vertical direction or a lateral direction. The sliding cover 11a sufficiently overlays at least the second display panel 13 during a closed position. In an open position, the second display panel 13 is revealed and visible to a user.

The sliding cover 11a overlays upon the second display panel 13 with a minute gap between the bottom surface of the cover 11a and a top (or viewable) surface of the second display panel 13. This is to prevent the sliding cover 11a from contacting the top surface and scratching it. Alternatively, the sliding cover 11a may overlay in direct contact with the top surface of the second display panel 13 if at least the bottom surface of the sliding cover 11a is made of a non-abrasive (or non-scratch) material, or according to a manufacturer's preference. To aid a user slide the cover 11a from an open position to a closed position smoothly, and vice versa, guiding rails may be provided to guide the sliding movement.

In an open position, the sliding cover 11a may be stored discretely and hidden from a user's view. This may be done by having a rotating rail within the device 10 to receive the sliding cover 11a and wrapping it around the rail while the cover 11a slides to an open position. However, there are other methods known to a person skilled in the art.

Another example of a cover for use in the described embodiments is a retractable cover slidably mounted to the device 10, as described in US Patent No. 5,530,234. The retractable cover may be modified for use by having a viewing means, or having the retractable cover made of a transparent material, as described earlier.

While both the first and the second display panels are arranged on a same surface of the hybrid device 10, it may not be so limited. The display panels may be arranged on different surfaces of the device 10. However, for consistent display location of information and good user presentation, both display panels need to be simultaneously visible to a user when the cover is in an open position. Similarly, the number of display panels may not be limited.

## Claims

1. A display assembly for a portable device including:
a main body;
input means on the main body for a user to activate different operation modes of the device;
said display assembly comprising
at least first and second display panels (12,13) pre-assigned to respective operation modes for displaying associated information and selected cross-operation information, wherein each display panel (12,13) is separately powered up when its respective operation mode is activated, and wherein the operation modes are separately activatable;
said portable device further more comprising
a cover (11) attached to the main body;
wherein the cover is movable between an open position, in which the first and second display panels are fully exposed and simultaneously viewable by the user; and a closed position in which the first display panel is visible and the second display panel is concealed;
wherein the first display panel is associated with a portable telephone mode, and the second display panel is associated with a Personal Digital Assistant (PDA) mode.

2. An assembly as recited in claim 1, wherein at least the first display panel (12) is consistently visible and at least the second display panel (13) is selectively overlain.

3. A display assembly as recited in claim 1 or 2, wherein the first display panel (12) is consistently visible through a viewing means on the cover (11).

4. A display assembly as recited in claim 3, wherein the viewing means is one of a cut-away portion and a transparent surface.

5. A display assembly as recited in any preceding claim, wherein the cover (11) is removable.

6. A portable device including a display assembly as recited in any preceding claim.

7. A combined portable telephone and personal digital assistant including a display assembly as recited in any one of claims 1 to 5.

8. A method of implementing a user presentation in a portable device provided with at least first and second display panels (12,13) pre-assigned to respective operation modes for displaying associated information and selected cross-operation information, a body provided with input means, and a cover; including the steps of:
arranging at least two display panels (12,13) for simultaneous viewing by a user;
providing for input via the input means enabling a user to activate different operation modes of the device;
separately activating the operating mode on the basis of the user input and separately powering up each of the display panels (12,13) when its respective operation mode is activated; and
providing for movement of the cover between an open position, in which the first and second display panels are fully exposed and simultaneously viewable by the user; and a closed position in which the first display panel is visible and the second display panel is concealed;
wherein the first display panel is associated with a portable telephone mode, and the second display panel is associated with a Personal Digital Assistant (PDA) mode.

9. A method as recited in claim 8 including the steps of:
consistently exposing at least the first display panel; and
selectively overlaying at least the second display panel.

10. A method as recited in claim 9, including the step of:
providing for the cover (11) to move to selectively overlay or expose at least the second display panel (13) wherein the first display panel is consistently visible (12).

## Patentansprüche

1. Eine Anzeigeanordnung für eine tragbare Vorrichtung, die folgende Merkmale umfasst:
einen Hauptkörper;
eine Eingabeeinrichtung auf dem Hauptkörper für einen Benutzer, um unterschiedliche Funktionsweisen der Vorrichtung zu aktivieren;
wobei die Anzeigeanordnung folgende Merkmale umfasst:
zumindest ein erstes und ein zweites Anzeigefeld (12, 13), die jeweiligen Funktionsweisen vorzugewiesen sind, zum Anzeigen zugeordneter Informationen und ausgewählter Überschneidungsfunktionsinformationen, wobei jedes Anzeigefeld (12, 13) getrennt eingeschaltet wird, wenn die jeweilige Funktionsweise derselben aktiviert ist, und wobei die Funktionsweisen getrennt aktivierbar sind;
wobei die tragbare Vorrichtung ferner folgende Merkmale umfasst:
eine Abdeckung (11), die an dem Hauptkörper befestigt ist;
wobei die Abdeckung zwischen einer offenen Position, in der das erste und das zweite Anzeigefeld voll freigelegt sind und gleichzeitig durch den Benutzer betrachtet werden können, und einer geschlossenen Position beweglich ist, in der das erste Anzeigefeld sichtbar ist und das zweite Anzeigefeld verdeckt ist;
wobei das erste Anzeigefeld einem Tragbares-Telefon-Modus zugeordnet ist und das zweite Anzeigefeld einem Personaldigitalassistent- (PDA-) Modus zugeordnet ist.

2. Eine Anordnung gemäß Anspruch 1, bei der zumindest das erste Anzeigefeld (12) gleichbleibend sichtbar ist und zumindest das zweite Anzeigefeld (13) selektiv überlagert ist.

3. Eine Anzeigeanordnung gemäß Anspruch 1 oder 2, bei der das erste Anzeigefeld (12) durch eine Betrachtungseinrichtung auf der Abdeckung (11) gleichbleibend sichtbar ist.

4. Eine Anzeigeanordnung gemäß Anspruch 3, bei der die Betrachtungseinrichtung entweder ein ausgeschnittener Abschnitt oder eine transparente Oberfläche ist.

5. Eine Anzeigeanordnung gemäß einem der vorhergehenden Ansprüche, bei der die Abdeckung (11) entfernbar ist.

6. Eine tragbare Vorrichtung, die eine Anzeigeanordnung gemäß einem der vorhergehenden Ansprüche umfasst.

7. Ein kombiniertes tragbares Telefon und Personaldigitalassistent, das eine Anzeigeanordnung gemäß einem der Ansprüche 1 bis 5 umfasst.

8. Ein Verfahren zum Implementieren einer Benutzerpräsentation in einer tragbaren Vorrichtung, die mit zumindest einem ersten und einem zweiten Anzeigefeld (12, 13), die jeweiligen Funktionsweisen zum Anzeigen zugeordneter Informationen und ausgewählter Überschneidungsfunktionsinformationen vorzugewiesen sind, mit einem Körper, der mit einer Eingabeeinrichtung versehen ist, und einer Abdeckung versehen ist, wobei das Verfahren folgende Schritte umfasst:
Anordnen von zumindest zwei Anzeigefeldern (12, 13) zum gleichzeitigen Betrachten durch einen Benutzer;
Bereitstellen einer Eingabe über die Eingabeeinrichtung, die es einem Benutzer ermöglicht, unterschiedliche Funktionsweisen der Vorrichtung zu aktivieren;
getrenntes Aktivieren der Funktionsweise auf der Basis der Benutzereingabe und getrenntes Einschalten jedes der Anzeigefelder (12, 13), wenn die jeweilige Funktionsweise desselben aktiviert ist; und
Bereitstellen einer Bewegung der Abdeckung zwischen einer offenen Position, in der das erste und das zweite Anzeigefeld völlig freigelegt sind und gleichzeitig durch den Benutzer betrachtet werden können, und einer geschlossenen Position, in der das erste Anzeigefeld sichtbar ist und das zweite Anzeigefeld verdeckt ist;
wobei das erste Anzeigefeld einem Tragbares-Telefon-Modus zugeordnet ist und das zweite Anzeigefeld einem Personaldigitalassistent- (PDA-) Modus zugeordnet ist.

9. Eine Verfahren gemäß Anspruch 8, das folgende Schritte umfasst:
durchgehendes Freilegen von zumindest dem ersten Anzeigefeld; und
selektives Überlagern von zumindest dem zweiten Anzeigefeld.

10. Eine Verfahren gemäß Anspruch 9, das folgenden Schritt umfasst:
Bereitstellen, dass sich die Abdeckung (11) bewegt, um zumindest das zweite Anzeigefeld (13) selektiv zu überlagern oder freizugeben, wobei das erste Anzeigefeld (12) gleichbleibend sichtbar ist.

## Revendications

1. Ensemble d'affichage destiné à un dispositif portable comprenant :
un corps principal ;
des moyens d'entrée situés sur le corps principal pour qu'un utilisateur active différents modes de fonctionnement du dispositif ;
ledit ensemble d'affichage comprenant :
au moins un premier et un second panneaux d'affichage (12, 13) préaffectés à des modes de fonctionnement respectifs pour afficher des informations associées et des informations de fonctionnement croisées sélectionnées, dans lequel chaque panneau d'affichage (12, 13) est alimenté séparément lorsque son mode de fonctionnement respectif est activé, et dans lequel les modes de fonctionnement peuvent être activés de manière séparée ;
ledit dispositif portable comprenant de plus :
un couvercle (11) attaché au corps principal ;
dans lequel le couvercle est mobile entre une position ouverte, dans laquelle les premier et second panneaux d'affichage sont exposés entièrement et peuvent être vus simultanément par l'utilisateur ; et une position fermée dans laquelle le premier panneau d'affichage est visible et le second panneau d'affichage est dissimulé ;
dans lequel le premier panneau d'affichage est associé à un mode de téléphone portable, et le second panneau d'affichage est associé à un mode d'assistant numérique personnel (PDA).

2. Ensemble selon la revendication 1, dans lequel le premier panneau d'affichage (12) est au moins visible de manière systématique et le second panneau d'affichage (13) est au moins recouvert de manière sélective.

3. Ensemble d'affichage selon l'une quelconque des revendications 1 ou 2, dans lequel le premier panneau d'affichage (12) est visible de manière systématique grâce à des moyens de visualisation situés sur le couvercle (11).

4. Ensemble d'affichage selon la revendication 3, dans lequel les moyens de visualisation sont l'une d'une partie tronquée et d'une surface transparente.

5. Ensemble d'affichage selon l'une quelconque des revendications précédentes, dans lequel le couvercle (11) est amovible.

6. Dispositif portable comprenant un ensemble d'affichage selon l'une quelconque des revendications précédentes.

7. Téléphone portable associé à un assistant numérique personnel comprenant un ensemble d'affichage selon l'une quelconque des revendications 1 à 5.

8. Procédé de mise en application d'une présentation d'utilisateur dans un dispositif portable fourni avec au moins un premier et un second panneaux d'affichage (12, 13) préaffectés à des modes de fonctionnement respectifs pour afficher des informations associées et des informations de fonctionnement croisé sélectionnées, un corps équipé de moyens d'entrée, et un couvercle ; comprenant les étapes consistant à :
agencer au moins deux panneaux d'affichage (12, 13) destinés à être vus de manière simultanée par un utilisateur ;
fournir une entrée par l'intermédiaire de moyens d'entrée permettant à un utilisateur d'activer différents modes de fonctionnement du dispositif;
activer de manière séparée le mode de fonctionnement sur la base de l'entrée d'utilisateur et alimenter de manière séparée chacun des panneaux d'affichage (12, 13) lorsque son mode de fonctionnement respectif est activé ; et
fournir un déplacement du couvercle entre une position ouverte, dans laquelle les premier et second panneaux d'affichage sont exposés entièrement et peuvent être vus simultanément par l'utilisateur; et une position fermée dans laquelle le premier panneau d'affichage est visible et le second panneau d'affichage est dissimulé ;
dans lequel le premier panneau d'affichage est associé à un mode de téléphone portable, et le second panneau d'affichage est associé à un mode d'assistant numérique personnel (PDA).

9. Procédé selon la revendication 8, comprenant les étapes consistant à :
exposer de manière systématique au moins le premier panneau d'affichage; et
recouvrir de manière sélective au moins le second panneau d'affichage.

10. Procédé selon la revendication 9, comprenant l'étape consistant à :
prévoir que le couvercle (11) se déplace pour recouvrir ou exposer de manière sélective au moins le second panneau d'affichage (13) dans lequel le premier panneau d'affichage est visible de manière systématique (12).
